# FASCICULE DE BREVET EUROPEEN

(11) **EP 3 405 355 B1**
(45) Date de publication et mention de la délivrance du brevet: **30.10.2019**
(21) Numéro de dépôt: 17702683.8
(22) Date de dépôt: 11.01.2017
(51) Int. Cl.: B60C 23/00, F16K 11/04, F16K 11/18, F16K 31/12

(54) **SYSTÈME DE GONFLAGE-DÉGONFLAGE D'UN PNEUMATIQUE**
SYSTEM ZUM BEFÜLLEN UND ENTLÜFTEN EINES REIFENS
SYSTEM FOR INFLATING AND DEFLATING A TYRE

(30) Priorité: 19.01.2016 FR 1650391
(43) Date de publication de la demande: 28.11.2018
(73) Titulaire: Teleflow SAS, 42300 Mably (FR)
(72) Inventeur: FAZEKAS, Stephane, 42640 Noailly (FR)
(74) Mandataire: Cabinet Laurent & Charras
(86) Numéro de dépôt international: PCT/FR2017/050058
(87) Numéro de publication internationale: WO 2017/125664

(56) Documents cités:
- EP-B1- 2 755 830
- DE-U1- 29 718 420
- FR-A1- 2 834 671

## Description

### DOMAINE TECHNIQUE

L'invention se rattache au secteur technique des systèmes de gonflage-dégonflage d'un pneumatique, notamment commandés à distance à partir de l'habitacle d'un véhicule par exemple.

Lesdits systèmes de gonflage-dégonflage permettent de pouvoir régler la pression des pneumatiques à partir de l'intérieur du véhicule par une simple interaction avec une interface de contrôle. Ceci est très utile pour des véhicules de types rallyes, militaires, agricoles ou civils. Ces systèmes sont généralement conçus pour tous pilotes de véhicules ayant besoin de faire varier la pression des pneumatiques, et en particulier faire varier la pression des pneumatiques pour s'adapter aux revêtements sur lesquels ils se déplacent, aux charges qu'ils transportent, et à la vitesse de déplacement du véhicule.

### ART ANTERIEUR

Il est connu de l'état de la technique des dispositifs pilotés de gonflage-dégonflage automatique d'un pneumatique, notamment décrits dans les demandes de brevets européen EP 0 511 135 et EP 2 755 830.

Les dispositifs décrits dans ces demandes de brevets comprennent des agencements permettant, à partir d'un compresseur relié à une entrée d'air, d'injecter de l'air à basse ou haute pression pour déplacer un jeu de clapets et gonfler le pneumatique. Inversement, lorsque de l'air est injecté à haute ou basse pression, un jeu de clapets est déplacé et le pneumatique est mis en communication avec l'air extérieur et est dégonflé.

Ces dispositifs donnent entière satisfaction lorsqu'il s'agit de gonfler des pneumatiques à basse ou haute pression. Cependant, un inconvénient de ces dispositifs réside dans le fait que le flux d'air injecté par le compresseur, et qui permet de piloter les clapets, est aussi utilisé pour gonfler le pneumatique.

Ainsi, ceci nécessite l'agencement d'un compresseur et d'un flexible de passage d'air associé à un joint tournant entre le compresseur et le dispositif de gonflage-dégonflage monté sur le pneumatique. La présence du joint tournant entraine des risques de fuites. L'agencement du joint tournant est complexe et doit notamment être en présence d'un lubrifiant.

Le document DE29718420 décrit un système de gonflage-dégonflage selon le préambule de la revendication 1

### EXPOSE DE L'INVENTION

Le problème que se propose de résoudre l'invention est donc de fournir un système de gonflage-dégonflage d'un pneumatique que comprend une roue permettant de s'affranchir de l'agencement d'un joint tournant.

Un autre objectif de l'invention est de fournir un tel système qui soit de conception simple et qui soit autonome.

Pour résoudre un tel problème, il a été conçu et mis au point un système de gonflage-dégonflage d'un pneumatique que comprend une roue, ledit système est remarquable en ce qu'il comprend une réserve d'air et une valve embarquées sur la roue, l'air étant confiné dans la réserve sous une pression supérieure à celle du pneumatique, la valve est en communication, d'une part, avec la réserve et, d'autre part, avec le pneumatique, ladite valve comprend des moyens de pilotage aptes à adopter :
- une position de repos dans laquelle lesdits moyens de pilotage assurent une mise en communication stable et hermétique entre le pneumatique et la valve ;
- une position de gonflage dans laquelle lesdits moyens de pilotage assurent une mise en communication entre le pneumatique et la réserve, en étant déplacés par de l'air injecté dans la valve par l'intermédiaire d'une électrovanne de gonflage reliée à la réserve ;
- une position de dégonflage dans laquelle lesdits moyens de pilotage assurent une mise en communication entre le pneumatique et l'extérieur de la valve, en étant déplacés par de l'air injecté par l'intermédiaire d'une électrovanne de dégonflage reliée à la réserve.

De cette manière, le système selon l'invention permet le gonflage-dégonflage d'un pneumatique au moyen d'une valve assujettie à une réserve d'air embarquée sur la roue et permet de s'affranchir de la mise en œuvre d'un joint tournant. Le système est plus simple et les risques de fuites sont diminués.

Le système selon l'invention permet de piloter le gonflage au moyen d'une électrovanne de gonflage, et de piloter le dégonflage au moyen d'une électrovanne de dégonflage. Ces électrovannes permettent, en injectant un faible volume d'air, de mettre en communication le pneumatique avec la réserve pour le gonflage dudit pneumatique, ou avec l'extérieur de la valve pour le dégonflage.

En d'autres termes, le flux d'air utilisé pour piloter le gonflage-dégonflage est distinct du flux d'air injecté dans le pneumatique pour le gonflage en tant que tel.

Etant donné que le pilotage de la valve pour le gonflage-dégonflage est effectué par l'injection de faibles volumes d'air, il est possible d'utiliser des mini-électrovannes de faible puissance et à faible consommation électrique. L'alimentation desdites électrovannes est autonome et peut se faire par piles électriques ou par batteries rechargeables

Selon une caractéristique avantageuse de l'invention, et afin de rendre le système pilotable à distance les électrovannes sont commandées par l'intermédiaire d'un système d'émetteur-récepteur sans fil. Bien entendu, tout type de commande sans fil peut être envisagé sans sortir du cadre de l'invention, les électrovannes peuvent être radiocommandées ou bien commandées par différents standards de communication sans fil bien connus de l'état de la technique, par exemple « LTE », « NFC », « Bluetooth », « Wi-Fi », etc. qui doivent être considérés comme des systèmes d'émetteurs-récepteurs selon l'interprétation de la présente invention.

Selon une forme de réalisation particulière du système selon l'invention, la valve comprend un corps creux comprenant :
- une chambre principale en communication avec le pneumatique ;
- une chambre d'échappement comprenant au moins un orifice de mise à l'air et en communication avec la chambre principale ;
- une chambre secondaire en communication avec la réserve d'air ;
- un premier clapet agencé à l'intérieur de la chambre principale pour obturer la communication avec la chambre d'échappement ;
- un deuxième clapet agencé pour obturer directement ou indirectement la communication entre la chambre principale et la chambre secondaire ;
- un orifice de gonflage relié à l'électrovanne de gonflage ;
- un orifice de dégonflage relié à l'électrovanne de dégonflage.

A partir de cette forme de réalisation particulière, plusieurs exemples de mise en œuvre de la valve peuvent être envisagés.

Selon un premier exemple de mise en œuvre de la valve :
- l'orifice de mise à l'air de la chambre d'échappement est obturé par un clapet d'échappement déplaçable dans une position d'ouverture à l'encontre d'un organe élastique de rappel ;
- le deuxième clapet est agencé à l'intérieur de la chambre d'échappement qui se présente sous la forme d'une chambre intermédiaire également en communication avec la chambre secondaire ;
- la valve comprend un troisième clapet agencé à l'intérieur de la chambre secondaire pour obturer la communication avec la chambre d'échappement ;
- les premier, deuxième et troisième clapets sont reliés les uns aux autres et assujettis à des premier et deuxième pistons agencés dans une chambre commune ;
- l'orifice de gonflage débouche dans la chambre commune entre les premier et deuxième pistons, et l'orifice de dégonflage débouche entre le deuxième piston et la chambre commune de sorte que :
- l'air injecté par l'électrovanne de gonflage provoque le déplacement du premier piston et entraine l'ouverture des premier et deuxième clapets, à l'encontre d'un organe élastique de rappel, pour permettre le gonflage du pneumatique ;
- l'air injecté par l'électrovanne de dégonflage provoque le déplacement du deuxième piston qui déplace davantage le premier piston de sorte à entrainer la fermeture du troisième clapet et l'ouverture du clapet d'échappement qui est poussé par le deuxième clapet afin de permettre le dégonflage du pneumatique.

Selon un deuxième exemple de mise en œuvre de la valve :
- le deuxième clapet est agencé à l'intérieur de la chambre principale qui est en communication directe avec la chambre secondaire, et est assujetti à un premier piston agencé dans une chambre de gonflage dans laquelle débouche l'orifice de gonflage de sorte que l'air injecté par l'électrovanne de gonflage provoque le déplacement du premier piston et l'ouverture du deuxième clapet et permet le gonflage du pneumatique ;
- le premier clapet est assujetti à un deuxième piston agencé dans une chambre de dégonflage dans laquelle débouche l'orifice de dégonflage de sorte que l'air injecté par l'électrovanne de dégonflage provoque le déplacement du deuxième piston et l'ouverture du premier clapet et permet le dégonflage du pneumatique ;
- la valve comprend un organe élastique de rappel agencé entre les premier et deuxième clapets pour les maintenir en position de repos et d'obturation.

Avantageusement, et afin de permettre au système de mesurer la pression du pneumatique, d'évaluer la pression dans la réserve d'air, ou de calculer le temps de gonflage-dégonflage, ledit système comprend un capteur de pression assujetti au système d'émetteur-récepteur, en communication avec la chambre principale.

### DESCRIPTION SOMMAIRE DES FIGURES

D'autres avantages et caractéristiques ressortiront mieux de la description qui va suivre, donnée à titre d'exemple non limitatif, du dispositif de mesure selon l'invention, à partir des dessins annexés dans lesquels :
- la figure 1 illustre un schéma de principe du système de gonflage-dégonflage selon l'invention ;
- la figure 2 est une vue en coupe longitudinale d'un premier exemple de mise en œuvre de la valve, la valve étant représentée en position de repos ;
- la figure 3 est une vue en coupe longitudinale similaire à celle de la figure 2, la valve étant représentée en position de gonflage ;
- la figure 4 est une vue en coupe longitudinale similaire à celle de la figure 2, la valve étant représentée en position de dégonflage ;
- la figure 5 est une vue en coupe longitudinale d'un deuxième exemple de mise en œuvre de la valve, la valve étant représentée en position de repos ;
- la figure 6 est une vue en coupe longitudinale similaire à celle de la figure 5, la valve étant représentée en position de gonflage ;
- la figure 7 est une vue en coupe longitudinale similaire à celle de la figure 5, la valve étant représentée en position de dégonflage.

### DESCRIPTION DETAILLEE DE L'INVENTION

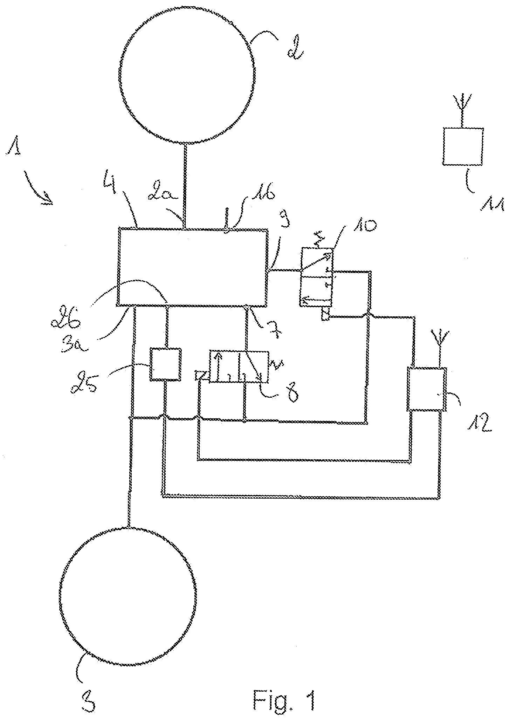

En référence à la figure 1, l'invention concerne un système (1) de gonflage-dégonflage d'un pneumatique (2) que comprend une roue, à partir d'une réserve d'air (3) confiné sous une pression supérieure à celle du pneumatique (2).

La réserve d'air (3) est embarquée sur la roue du pneumatique (2) et peut notamment être agencée à l'intérieur dudit pneumatique (2).

Le système (1) comprend une valve (4), aussi embarquée sur la roue, sous la forme d'un corps creux (4a) comprenant une chambre principale (5) en communication avec le pneumatique (2) par l'intermédiaire d'une entrée (2a), et une chambre secondaire (6) en communication avec la réserve (3) par l'intermédiaire d'une entrée (3a).

La valve (4) comprend un orifice de gonflage (7) assujetti à une électrovanne de gonflage (8) et un orifice de dégonflage (9) assujetti à une électrovanne de dégonflage (10). Les électrovannes (8, 10) sont radiocommandées par l'intermédiaire d'un système d'émetteur-récepteur (11, 12) pour commander à distance le gonflage-dégonflage, notamment à partir d'un pupitre de commande agencé par exemple dans l'habitacle du véhicule sur lequel est installé le système (1).

Selon l'invention, la valve (4) comprend des moyens de pilotage constitués par un agencement de clapets et de pistons aptes à adopter :
- une position de repos dans laquelle lesdits moyens de pilotage rendent hermétique la liaison entre le pneumatique (2) et la valve (4) ;
- une position de gonflage dans laquelle lesdits moyens de pilotage mettent le pneumatique (2) en communication avec la réserve (3), en étant déplacés par de l'air injecté dans la valve (4) par l'intermédiaire de l'électrovanne de gonflage (8) reliée à la réserve (3) ;
- une position de dégonflage dans laquelle lesdits moyens de pilotage mettent le pneumatique (2) en communication avec l'extérieur de la valve, en étant déplacés par de l'air injecté par l'intermédiaire de l'électrovanne de dégonflage (10) reliée à la réserve (3).

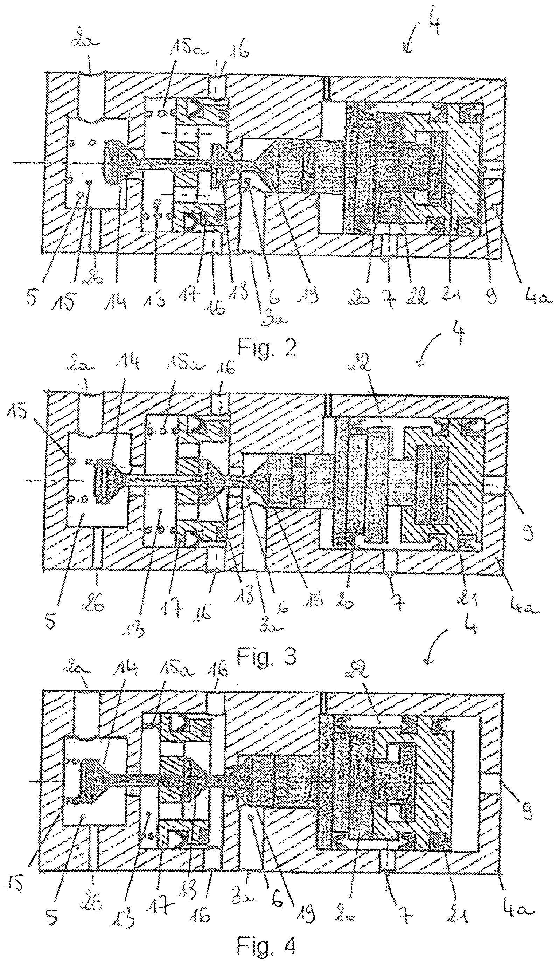

Selon un premier exemple de réalisation de la valve (4) du dispositif selon l'invention, illustré aux figures 2 à 4, la chambre principale (5) est agencée à une première extrémité du corps creux (4a). La valve (4) comprend ensuite une chambre d'échappement (13).

En référence à la figure 2 qui illustre la position de repos de la valve (4), la chambre principale (5) et la chambre d'échappement (13) communiquent entre elles par l'intermédiaire d'un orifice obturé par un premier clapet (14) agencé à l'intérieur de ladite chambre principale (5).

Le premier clapet (14) est monté déplaçable à l'intérieur de la chambre principale (5) entre une position de repos dans laquelle il obture la communication avec la chambre d'échappement (13) et une position d'ouverture, à l'encontre d'un organe élastique de rappel (15) monté à l'intérieur de la chambre principale (5).

La chambre d'échappement (13) comprend au moins un orifice de mise à l'air (16) obturé par un clapet d'échappement (17) déplaçable dans une position d'ouverture à l'encontre d'un organe élastique de rappel (15a) agencé dans la chambre d'échappement (13).

La chambre d'échappement (13) est agencée entre la chambre principale (5) et la chambre secondaire (6), et est considérée comme une chambre intermédiaire. La chambre secondaire (6) est ensuite agencée dans la valve (4) en communication par l'intermédiaire d'un orifice avec la chambre d'échappement (13). L'orifice est obturé par un deuxième clapet (18) agencé à l'intérieur de la chambre d'échappement (13) et déplaçable entre une position de repos dans laquelle il obture l'orifice, une position d'ouverture, et une position d'échappement dans laquelle il pousse le clapet d'échappement (17) en position d'ouverture et de mise à l'air. La chambre secondaire (6) est reliée à la réserve d'air (3) pour le gonflage du pneumatique (2).

La chambre secondaire (6) comprend un troisième clapet (19) agencé à l'intérieur de la chambre secondaire (6) pour obturer la communication avec la chambre d'échappement (13).

Les premier, deuxième et troisième clapets (14, 18, 19) sont reliés les uns aux autres et assujettis à des premier et deuxième pistons (20, 21) agencés dans une chambre commune (22).

Dans cette forme de réalisation, l'orifice de gonflage (7) débouche dans la chambre commune (22) entre les premier et deuxième pistons (20, 21), et l'orifice de dégonflage (9) débouche dans la chambre commune (22) derrière le deuxième piston (21), à savoir à l'opposé du premier piston (20).

Ainsi, et en référence à la figure 3 qui illustre la position de gonflage de la valve (4), l'air injecté par l'électrovanne de gonflage (8) à travers l'orifice de gonflage (7) provoque le déplacement du premier piston (20) et entraine l'ouverture des premier et deuxième clapets (14, 18), à l'encontre de l'organe élastique de rappel (15).

De cette manière, étant donné que la pression à l'intérieur de la réserve (3) est supérieure à la pression à l'intérieur du pneumatique (2), l'air présent dans la réserve (3) s'échappe et passe successivement dans la chambre secondaire (6), dans la chambre d'échappement (13), dans la chambre principale (5), et est injecté dans le pneumatique (2) pour le gonflage en tant que tel.

Lorsque l'air n'est plus injecté dans l'orifice de gonflage (7), la chambre commune (22) n'est plus sous pression. Sous l'effet de la pression de la réserve (3) sur le troisième clapet (19), et de la pression du pneumatique (2) et de l'organe élastique de rappel (15) sur le premier clapet (14), le premier piston (20) est repoussé dans sa position d'origine et les premier et deuxième clapets (14, 18) sont refermés ce qui correspond à la position de repos de la valve (4).

En référence à la figure 4 qui illustre la position de dégonflage de la valve (4), l'air injecté par l'électrovanne de dégonflage (10) à travers l'orifice de dégonflage (9) provoque le déplacement du deuxième piston (21) qui déplace davantage le premier piston (20) dans une position de dégonflage. Dans cette position, le troisième clapet (19) est déplacé dans une position dans laquelle il obture la communication entre la chambre secondaire (6) reliée à la réserve (3), et la chambre d'échappement (13). Le deuxième clapet (18) est déplacé dans la position d'échappement dans laquelle il force l'ouverture du clapet d'échappement (17) de la chambre d'échappement (13) à l'encontre de l'organe élastique de rappel (15a). Le premier clapet (14) est également déplacé en position d'ouverture de manière à faire communiquer la chambre principale (5) avec la chambre d'échappement (13) dont l'orifice de mise à l'air (16) est ouvert. De cette manière, l'air présent dans le pneumatique (2) est évacué hors de la valve (4) et le pneumatique (2) est dégonflé.

Lorsque l'air n'est plus injecté, la chambre commune (22) n'est plus sous pression. Sous l'effet de la pression de la réserve (3) sur le troisième clapet (19), des organes élastiques de rappel (15, 15a), et de la pression du pneumatique (2), les premier et deuxième clapets (14, 18) ainsi que le clapet d'échappement (17) sont refermés, et les premier et deuxième pistons (20, 21) sont repoussés dans leurs positions d'origine, ce qui correspond à la position de repos de la valve (4).

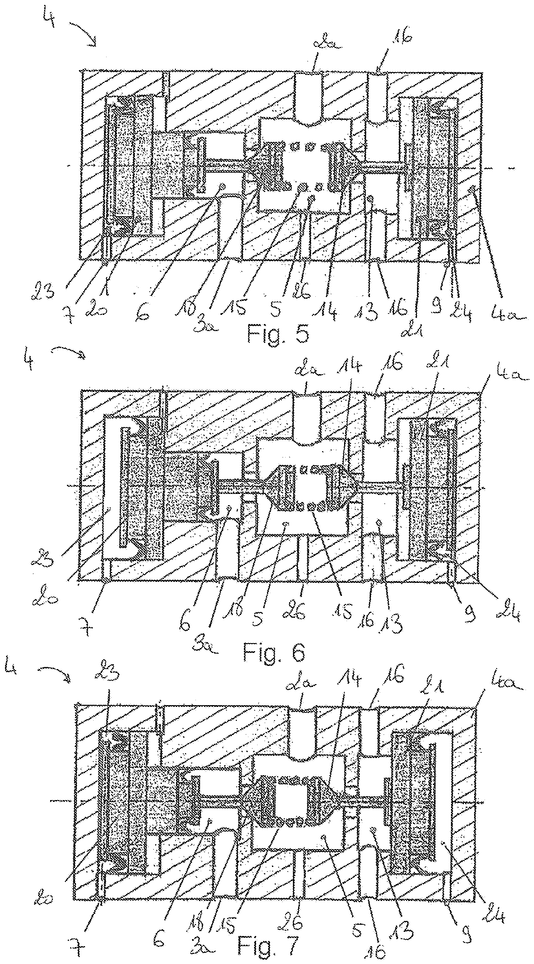

Selon un deuxième exemple de réalisation de la valve (4) du dispositif selon l'invention, illustré aux figures 5 à 7, les chambres secondaire (6) et d'échappement (13), sont agencées de part et d'autre de la chambre principale (5).

La valve (4) comprend à une extrémité, une chambre de gonflage (23) recevant un premier piston (20) et dans laquelle débouche l'orifice de gonflage (7), et à l'autre extrémité une chambre de dégonflage (24) recevant un deuxième piston (21) et dans laquelle débouche l'orifice de dégonflage (9).

La chambre principale (5) en relation avec le pneumatique (2) communique, de part et d'autre par l'intermédiaire d'orifices, avec la chambre secondaire (6) reliée à la réserve (3) et avec la chambre d'échappement (13) comprenant au moins un orifice de mise à l'air (16).

Des premier et deuxième clapets (14, 18) sont agencés à l'intérieur de la chambre principale (5) et sont aptes à adopter des positions de fermeture des orifices pour obturer la communication entre la chambre principale (5), et les chambres secondaire (6) et d'échappement (13), et des positions d'ouverture, à l'encontre d'un organe élastique de rappel (15) agencé entre les premier et deuxième clapets (14, 18).

Le deuxième clapet (18) qui est agencé pour obturer la communication avec la chambre secondaire (6) est assujetti au premier piston (20) de sorte que l'air injecté par l'électrovanne de gonflage (8) à travers l'orifice de gonflage (7) dans la chambre de gonflage (23) provoque le déplacement du premier piston (20) et l'ouverture du deuxième clapet (18) et permet le gonflage du pneumatique (2).

Lorsque l'air n'est plus injecté par l'orifice de gonflage (7), la chambre de gonflage (23) n'est plus sous pression. Sous l'effet de la pression de la réserve d'air (3) sur le premier piston (20), de la pression du pneumatique (2) et de l'organe élastique de rappel (15), le deuxième clapet (18) est refermé et le premier piston (20) est repoussé dans sa position d'origine correspondant à la position de repos de la valve (4).

Le premier clapet (14) qui est agencé pour obturer la communication avec la chambre d'échappement (13) est assujetti au deuxième piston (21) de sorte que l'air injecté par l'électrovanne de dégonflage (10) dans la chambre de dégonflage (24) provoque le déplacement du deuxième piston (21) et l'ouverture du premier clapet (14) et permet le dégonflage du pneumatique (2).

Lorsque l'air n'est plus injecté par l'orifice de dégonflage (9), la chambre de dégonflage (24) n'est plus sous pression. Sous l'effet de l'organe élastique de rappel (15) et de la pression du pneumatique (2), le premier clapet (14) est refermé et le deuxième piston (21) est repoussé dans sa position d'origine correspondant à la position de repos de la valve (4).

Avantageusement, un capteur de pression (25) est mis en relation avec la chambre principale (5) par l'intermédiaire d'une entrée (26) et est connecté au système d'émetteur-récepteur (11, 12). Le capteur de pression (25) permet en position de repos de la valve (4) de mesurer la pression à l'intérieur du pneumatique (2). Bien entendu, l'Homme du Métier saura adapter la nature du capteur de pression à mettre en œuvre en fonction du mode de réalisation exploité de l'invention.

Pendant la phase de gonflage, le capteur permet d'évaluer la pression de la réserve (3) et du pneumatique (2) en connaissant la pression du pneumatique (2) avant gonflage et compte tenu des pertes de charges en amont et en aval du capteur. La pression mesurée par le capteur permet également d'estimer le temps de gonflage-dégonflage compte tenu des pertes de charges connues de la valve (4). Etant donné que le capteur est connecté au système d'émetteur-récepteur (11, 12), ces mesures peuvent être affichées dans l'habitacle du véhicule.

De cette manière, le système (1) selon l'invention permet le gonflage-dégonflage d'un pneumatique (2) au moyen d'une valve (4) assujettie à une réserve d'air (3) embarquée sur la roue et permet de s'affranchir de la mise en œuvre d'un joint tournant et également d'une liaison électrique entre la roue et le châssis du véhicule. Le système (1) est plus simple et les risques de fuites sont diminués.

Le système (1) selon l'invention permet de piloter le gonflage au moyen d'une électrovanne de gonflage (8) et le dégonflage au moyen d'une électrovanne de dégonflage (10). Ces électrovannes (8, 10) permettent, en injectant une certaine pression d'air, de mettre en communication le pneumatique (2) avec la réserve (3) pour le gonflage dudit pneumatique (2) ou avec l'extérieur de la valve (4) pour le dégonflage. Le flux d'air utilisé pour piloter le gonflage-dégonflage est distinct du flux d'air injecté dans le pneumatique (2) pour le gonflage en tant que tel. La valve comprend une entrée (7) de pilotage du gonflage, une entrée (9) de pilotage du dégonflage, une entrée d'admission (3a) et une entrée de gonflage (2a).

Le système (1) selon l'invention est autonome et pilotable à distance. Le pilotage de la valve (4) pour le gonflage-dégonflage, effectué par les électrovannes (8, 10), est réalisé par l'injection de faibles volumes d'air sous pression, ce qui permet l'utilisation de mini électrovannes de faible puissance et à faible consommation électrique. L'alimentation desdites électrovannes (8, 10) peut se faire par piles électriques ou par batteries rechargeables

## Revendications

1. Système (1) de gonflage-dégonflage d'un pneumatique (2) que comprend une roue, ledit système comprenant une réserve d'air (3) et une valve (4) embarquées sur la roue, l'air étant confiné dans la réserve (3) sous une pression supérieure à celle du pneumatique (2), la valve (4) est en communication d'une part, avec la réserve (3) et, d'autre part, avec le pneumatique (2), ***caractérisé* en ce que** ladite valve (4) comprend des moyens de pilotage aptes à adopter :
- une position de repos dans laquelle lesdits moyens de pilotage assurent une mise en communication stable et hermétique entre le pneumatique (2) et la valve (4) ;
- une position de gonflage dans laquelle lesdits moyens de pilotage assurent une mise en communication entre le pneumatique (2) et la réserve (3), en étant déplacés par de l'air injecté dans la valve (4) par l'intermédiaire d'une électrovanne de gonflage (8) reliée à la réserve (3) ;
- une position de dégonflage dans laquelle lesdits moyens de pilotage assurent une mise en communication entre le pneumatique (2) et l'extérieur de la valve, en étant déplacés par de l'air injecté par l'intermédiaire d'une électrovanne de dégonflage (10) reliée à la réserve (3).

2. Système (1) selon la revendication 1, ***caractérisé* en ce que** les électrovannes (8, 10) sont commandées par l'intermédiaire d'un système d'émetteur-récepteur (11, 12) sans fil.

3. Système (1) selon l'une quelconque des revendications 1 à 2, ***caractérisé* en ce que** la valve (4) comprend un corps creux (4a) comprenant :
- une chambre principale (5) en communication avec le pneumatique (2) ;
- une chambre d'échappement (13) comprenant au moins un orifice de mise à l'air (16) et en communication avec la chambre principale (5) ;
- une chambre secondaire (6) en communication avec la réserve d'air (3) ;
- un premier clapet (14) agencé à l'intérieur de la chambre principale (5) pour obturer la communication avec la chambre d'échappement (13) ;
- un deuxième clapet (18) agencé pour obturer directement ou indirectement la communication entre la chambre principale (5) et la chambre secondaire (6) ;
- un orifice de gonflage (7) relié à l'électrovanne de gonflage (8) ;
- un orifice de dégonflage (9) relié à l'électrovanne de dégonflage (10).

4. Système (1) selon la revendication 3, ***caractérisé* en ce que** :
- l'orifice de mise à l'air (16) de la chambre d'échappement (13) est obturé par un clapet d'échappement (17) déplaçable dans une position d'ouverture à l'encontre d'un organe élastique de rappel (15a) ;
- le deuxième clapet (18) est agencé à l'intérieur de la chambre d'échappement (13) qui se présente sous la forme d'une chambre intermédiaire également en communication avec la chambre secondaire (6) ;
- la valve (4) comprend un troisième clapet (19) agencé à l'intérieur de la chambre secondaire (6) pour obturer la communication avec la chambre d'échappement (13) ;
- les premier, deuxième et troisième clapets (14, 18, 19) sont reliés les uns aux autres et assujettis à des premier et deuxième pistons (20, 21) agencés dans une chambre commune (22) ;
- l'orifice de gonflage (7) débouche dans la chambre commune (22) entre les premier et deuxième pistons (20, 21), et l'orifice de dégonflage (9) débouche entre le deuxième piston (21) et la chambre commune (22) de sorte que :
- l'air injecté par l'électrovanne de gonflage (8) provoque le déplacement du premier piston (20) et entraine l'ouverture des premier et deuxième clapets (14, 18), à l'encontre d'un organe élastique de rappel (15), pour permettre le gonflage du pneumatique (2) ;
- l'air injecté par l'électrovanne de dégonflage (10) provoque le déplacement du deuxième piston (21) qui déplace davantage le premier piston (20) de sorte à entrainer la fermeture du troisième clapet (19) et l'ouverture du clapet d'échappement (17) qui est poussé par le deuxième clapet (18) afin de permettre le dégonflage du pneumatique (2).

5. Système (1) selon la revendication 3, ***caractérisé* en ce que**
- le deuxième clapet (18) est agencé à l'intérieur de la chambre principale (5) qui est en communication directe avec la chambre secondaire (6), et est assujetti à un premier piston (20) agencé dans une chambre de gonflage (23) dans laquelle débouche l'orifice de gonflage (7) de sorte que l'air injecté par l'électrovanne de gonflage (8) provoque le déplacement du premier piston (20) et l'ouverture du deuxième clapet (18) et permet le gonflage du pneumatique (2) ;
- le premier clapet (14) est assujetti à un deuxième piston (21) agencé dans une chambre de dégonflage (24) dans laquelle débouche l'orifice de dégonflage (9) de sorte que l'air injecté par l'électrovanne de dégonflage (10) provoque le déplacement du deuxième piston (21) et l'ouverture du premier clapet (14) et permet le dégonflage du pneumatique (2) ;
- la valve (4) comprend un organe élastique de rappel (15) agencé entre les premier et deuxième clapets (14, 18) pour les maintenir en position de repos et d'obturation.

6. Système (1) selon l'une quelconque des revendications 3 à 5, ***caractérisé* en ce qu'**il comprend un capteur de pression (25) assujetti au système d'émetteur-récepteur (11, 12), en communication avec la chambre principale (5).

## Patentansprüche

1. System (1) zum Aufpumpen- Entleeren eines Reifens (2), der zu einem Rad gehört, dieses System enthält eine Luftreserve (3) und ein Ventil (4), enthalten im Rad, die Luft ist in der Luftreserve (3) eingeschlossen, mit einem höheren Druck als der des Reifens (2), das Ventil (4) steht einerseits in Verbindung mit der Luftreserve (3) und andererseits mit dem Reifen (2), ***dadurch gekennzeichnet, dass*** das genannte Ventil (4) Steuervorrichtungen enthält, die einnehmen können:
- eine Ruheposition, in der diese Steuervorrichtungen eine stabile und hermetische Verbindung zwischen dem Reifen (2) und dem Ventil (4) sicherstellen;
- eine Aufpumpposition, in der diese Steuervorrichtungen eine Verbindung zwischen dem Reifen (2) und der Luftreserve (3) sicherstellen, indem sie durch Luft, die in das Ventil (4) über ein Aufpump- Magnetventil (8) eingeblasen wird, das mit der Luftreserve (3) verbunden ist, verstellt werden;
- eine Entleerposition, in der diese Steuervorrichtungen eine Verbindung zwischen dem Reifen (2) und der Außenseite des Ventils sicherstellen, indem sie durch Luft, die in das Ventil (4) über ein Entleer- Magnetventil (10) eingeblasen wird, das mit der Luftreserve (3) verbunden ist, verstellt werden.

2. System (1) nach Anspruch 1 ***dadurch gekennzeichnet, dass*** die Magnetventile (8, 10) über ein drahtloses Sender- Empfänger- System (11, 12) gesteuert werden.

3. System (1) nach einem der vorstehenden Ansprüche 1 und 2, ***dadurch gekennzeichnet, dass*** das Ventil (4) einen Hohlkörper (4a) enthält, der besteht:
- aus einer Hauptkammer (5), die in Verbindung mit dem Reifen (2) steht;
- einer Auslasskammer (13), die mindestens eine Auslassöffnung (16) enthält und mit der Hauptkammer (5) in Verbindung steht;
- einer Sekundärkammer (6), die in Verbindung mit der Luftreserve (3) steht;
- einer ersten Klappe (14), angeordnet im Inneren der Hauptkammer (5) zum Verschließen der Verbindung mit der Auslasskammer (13);
- eine zweite Klappe (18), angeordnet zum direkten oder indirekten Verschließen der Verbindung zwischen der Hauptkammer (5) und der Sekundärkammer (6);
- eine Aufpumpöffnung (7), verbunden mit dem Aufpump- Magnetventil (8);
- eine Entleeröffnung (9), verbunden mit dem Entleer- Magnetventil (10).

4. System (1) nach Anspruch 3, ***dadurch gekennzeichnet, dass:***
- die Entlüftungsöffnung (16) der Auslasskammer (13) durch eine Auslassklappe (17) verschlossen werden kann, die in eine Öffnungsposition gegen eine elastische Rückstellvorrichtung (15a) verstellt werden kann;
- die zweite Klappe (18) im Inneren der Auslasskammer (13) angeordnet ist, die die Form einer Zwischenkammer hat, die ebenfalls mit der Sekundärkammer (6) in Verbindung steht;
- das Ventil (4) eine dritte Klappe (19) beinhaltet, angeordnet im Inneren der Sekundärkammer (6), zum Verschließen der Verbindung mit der Auslasskammer (13);
- die erste, zweite und dritte Klappe (14, 18, 19) miteinander verbunden sind und von einem ersten und einem zweiten Kolben (20, 21) abhängen, die in einer gemeinsamen Kammer (22) untergebracht sind;
- die Aufpumpöffnung (7) in der gemeinsamen Kammer (22) zwischen dem ersten und zweiten Kolben (20, 21) mündet und die Entleeröffnung (9) zwischen dem zweiten Kolben (21) und der gemeinsamen Kammer (22) mündet, so dass:
- die vom Aufpump- Magnetventil (8) eingeblasene Luft zur Verschiebung des ersten Kolbens (20) führt und so das Öffnen der ersten und zweiten Klappe (14. 18) gegen eine elastische Rückstellvorrichtung (15) verursacht und damit das Aufpumpen des Reifens (2) erlaubt;
- die vom Entleer- Magnetventil (8) eingeblasene Luft zur Verschiebung des zweiten Kolbens (21) führt, der den ersten Kolben (20) noch weiter verschiebt und so das Schließen der dritten Klappe (19) und das Öffnen der Auslassklappe (17) verursacht, die von der zweiten Klappe (18) geschoben wird und damit das Entleeren des Reifens (2) ermöglicht.

5. System (1) nach Anspruch 3, ***dadurch gekennzeichnet, dass***
- die zweite Klappe (18) im Inneren der Hauptkammer (5) angeordnet ist und in direkter Verbindung mit der Sekundärkammer (6) steht und von einem ersten Kolben (20) abhängt, untergebracht in einer Aufpumpkammer (23), in der die Aufpumpöffnung (7) mündet, so dass die vom Aufpump- Magnetventil (8) eingeblasene Luft zur Verschiebung des ersten Kolbens (20) und der Öffnung der zweiten Klappe (18) führt und so das Aufpumpen des Reifens (2) erlaubt;
- die erste Klappe (14) von einem zweiten Kolben (21) abhängt, der in einer Entleerkammer (24) untergebracht ist, in der die Entleeröffnung (9) mündet, so dass die vom Entleer- Magnetventil (10) eingeblasene Luft zur Verschiebung des zweiten Kolbens (21) und der Öffnung der ersten Klappe (14) führt und so das Entleeren des Reifens (2) erlaubt;
- das Ventil (4) eine elastische Rückstellvorrichtung (15) umfasst, angeordnet zwischen der ersten und der zweiten Klappe (14, 18), um diese in der Ruhe- und der Verschlussposition zu halten.

6. System (1) nach einem der vorstehenden Ansprüche 3 bis 5, ***dadurch gekennzeichnet, dass*** es einen Druckfühler (25) enthält, der vom Sender-Empfänger- System (11, 12) abhängt, das mit der Hauptkammer (5) in Verbindung steht.

## Claims

1. A system (1) for inflating-deflating a tyre (2) that comprises a wheel, said system comprises a reserve of air (3) and a valve (4) carried on board the wheel, the air being confined to the reserve (3) under pressure higher than that of the tyre (2), the valve (4) is in communication, with the reserve (3) and with the tyre (2), ***characterized* in that** said valve (4) comprises control means able to adopt:
- a resting position in which said control means ensure stable and hermetic communication between the tyre (2) and the valve (4);
- an inflation position in which said control means provide communication between the tyre (2) and the reserve (3), by being moved by air injected into the valve (4) by means of an inflation electrically operated valve (8) connected to the reserve (3);
- a deflation position in which said control means make it possible to place the tyre (2) in communication with the exterior of the valve, by being moved by the air injected by means of a deflation electrically operated valve (10) connected to the reserve (3).

2. The system (1) according to claim 1, ***characterized* in that** the electrically operated valves (8, 10) are controlled by means of a wireless transceiver system (11, 12).

3. The system (1) according to any one of the preceding claims 1 to 2, ***characterized* in that** the valve (4) comprises a hollow body (4a) comprising:
- a main chamber (5) in communication with the tyre (2);
- a discharge chamber (13) comprising at least one venting port (16) and in communication with the main chamber (5);
- a secondary chamber (6) in communication with the reserve of air (3);
- a first valve (14) arranged inside the main chamber (5) for closing the communication with the discharge chamber (13);
- a second valve (18) arranged for directly or indirectly closing the communication between the main chamber (5) and the secondary chamber (6);
- an inflation port (7) connected to the inflation electrically operated valve (8);
- a deflation port (9) connected to the deflation electrically operated valve (10).

4. The system (1) according to claim 3, ***characterized* in that**:
- the discharge chamber (13) venting port (16) is closed by means of a discharge valve (17) movable to an open position against an elastic return member (15a);
- the second valve (18) is arranged inside the discharge chamber (13), which is in the form of an intermediate chamber, which is also in communication with the secondary chamber (6);
- the valve (4) comprises a third valve (19) arranged inside the secondary chamber (6) for closing the communication with the discharge chamber (13);
- the first, second and third valves (14, 18, 19) are connected to each other and connected to first and second pistons (20, 21) arranged within a common chamber (22);
- the inflation port (7) opens out into the common chamber (22) between the first and second pistons (20, 21), and the deflating port (9) opens out between the second piston (21) and the common chamber (22) such that:
- the air injected by means of the inflation electrically operated valve (8) causes the movement of the first piston (20) and leads to the opening of the first and second valves (14, 18), against an elastic return member (15), in order to allow for the inflation of the tyre (2);
- the air injected by means of the deflation electrically operated valve (10) causes the movement of the second piston (21), which further moves the first piston (20) in such a way as to lead to the closing of the third valve (19) and the opening of the discharge valve (17), which is pushed by the second valve (18) in order to allow for the deflation of the tyre (2).

5. The system (1) according to claim 3, ***characterized* in that**
- the second valve (18) is arranged within the main chamber (5), which is in direct communication with the secondary chamber (6), and is connected to a first piston (20) arranged within an inflation chamber (23) into which the inflation port (7) opens out in such a way that the air injected by the inflation electrically operated valve (8) causes the movement of the first piston (20) and the opening of the second valve (18) and allows for the inflation of the tyre (2);
- the first valve (14) is connected to a second piston (21) arranged within a deflation chamber (24) into which the deflation port (9) opens out in such a way that the air injected by the deflation electrically operated valve (10) causes the movement of the second piston (21) and the opening of the first valve (14) and allows for the deflation of the tyre (2);
- the valve (4) comprises an elastic return member (15) arranged between the first and second valves (14, 18) in order to keep them in the resting and closed position.

6. The system (1) according to any one of claims 3 to 5, ***characterized* in that** it comprises a pressure sensor (25) connected to the transceiver system (11, 12), in communication with the main chamber (5).
